# EUROPEAN PATENT SPECIFICATION

(11) **EP 1 464 635 B1**
(45) Date of publication and mention of the grant of the patent: **19.04.2017**
(21) Application number: 03019242.1
(22) Date of filing: 26.08.2003
(51) Int. Cl.: C05C 1/00, C05C 9/00, C05C 3/00, C05D 5/00, C05F 5/00, C05C 9/02, C05D 9/02, C05F 11/00

(54) **METHOD FOR OBTAINING FERTILIZERS USING ORGANIC EXTRACTS FROM AQUEOUS WOOD LEACHING PROCESSES**
VERFAHREN ZUR HERSTELLUNG VON DÜNGEMITTELN AUS ORGANISCHEN EXTRAKTEN DER WASSERAUSWASCHUNG VON HOLZ
PROCÉDÉ DE PRÉPARATION D' ENGRAIS À PARTIR D' EXTRAITS OBTENUS PAR LIXIVIATION DU BOIS AU MOYEN DE L'EAU

(30) Priority: 31.03.2003 IT MI20030640
(43) Date of publication of application: 06.10.2004
(60) Divisional application: 16200157.2
(73) Proprietor: Gruppo Mauro Saviola S.r.l., 46019 Viadana (MN) (IT)
(72) Inventor: Bargiacchi, Enrica, 53040 Radicofani (Siena) (IT); Costa, Gianluca, 53040 Radicofani (Siena) (IT); Della Croce, Carlo, 53040 Radicofani (Siena) (IT); Foschi, Lara, 53040 Radicofani (Siena) (IT); Pampana, Silvia, 53040 Radicofani (Siena) (IT); Miele, Sergio, 53040 Radicofani (Siena) (IT); Rizzi, Giuseppe, 53040 Radicofani (Siena) (IT)
(74) Representative: De Gregori, Antonella

(56) References cited:
- EP-A- 1 097 912
- GB-A- 506 807
- GB-A- 191 107 394
- US-A- 4 116 663
- US-B1- 6 458 747

## Description

The present invention relates to a method for using organic extracts from aqueous wood leaching processes for preparing organic acidifying solutions and highly efficient and weakly polluting manure compositions for biological agriculture.

As is known, a very important component of vegetable biomasses is constituted by tannin, i.e. a set of phenol compounds which are very diffused in vegetables (such as pteridophytes, gymnosperms, angiosperms) and which are present in fruits, barks and, mainly, wood materials.

From a chemical standpoint, they have very complex structures and molecular weights from 500 to 3,000.

Their classification is difficult because of a broad variability thereof however, on an universal scale, they can be included in two main classes, that is hydrolyzable tannins and condensates.

Hydrolyzable tannins are gallic acid esters (gallotannins) and elagic acid (elagictannins) compounds with a sugar material usually consisting of glucose and they can be hydrolyzed from acids or enzymes in monomeric products.

The condensate tannins, also called proantocyanidins or polyflavonoids (PA), comprise a set of polyhydroxyflavonol polymers with C-C bindings between the sub-units.

On the other hand, by better and deeply considering the structure of the above mentioned products, the above distinction tends to disappear, also considering that condensate tannins can contain gallic acid esterified to the 3-OH level of the C ring.

Actually the main characteristic affecting the properties of tannins seems to be an unique high local concentration of hydroxyl ortho-phenol assemblies.

Hydrolyzable tannins, in particular, are mainly associated with gallic or elagic acid derivatives.

In condensate tannins, on the other hand, (such procyanidins, prodelphinidins) the same function is provided by ring B phenol hydroxyls (also esterified gallate can have a contribute).

The related biologic activity of the above mentioned tannins appears to be bound, at least partially, to the molar contents of these ortho-phenol assemblies.

Their spatial concentration too is a further important parameter.

Generally, hydrolyzable tannins are biologic agents having a power, for unitary mass, which is greater than that of condensate tannins, and their capability of precipitating proteins is directly related to the galloyl group number.

This feature makes them suitable for forming large complex, mainly with proteins, but also with other macromolecules, such as cellulose and pectins.

Their non reversible protein reaction is very interesting, since it allows to precipitate proteins from solutions, thereby providing a base for an industrial use thereof as vegetable tannin elements.

The above mentioned non-tannin materials comprises sugars, mainly pentosanes (from 9 to 23%), such as xylose and ribose; oligosaccharides, and in particular xyloglucan, xylane and arabinogalactan; as well as hexosans (from 4 to 13%) such as mannan and hemicelluloses (arabogalactans, specially in conifers).

Other important components comprise organic acids, such as the following: acetic, oxalic, malic, tartaric, lactic, piruvic, glyceric, glycolic, citric and isocitric, ascorbic, oxalacetic, succinic acids and so on.

Urea is the nitrogenous manure which at present is the most used and diffused manure compound.

However, it has a low nitrogen absorption efficiency, in growing plants, because it, both in solid and liquid form, is subjected to great losses through the soil cultivation system, said losses depending, at first, on ammonia volatilization, and, secondly, an excessively quick nitrification of the ammonia compounds from urea degradation; actually, if said are not intercepted by the plants, they will be dissipated through soil gravitational waters to provide large polluting sources.

To improve the urea agronomic efficiency, several amendment technologic approaches have been already proposed for making this manure suitable, both in its solid and liquid form, with substances suitable to modify the releasing time thereof, or to enhance its agronomic efficiency.

EP-A-1258191 discloses agricultural compositions comprising agriculturally active ingredient and tannin for preventing leaching of the active ingredient in the soil.

In particular, an addition of nitrification inhibiting substances and ureasis preventing materials, or an embedding by sulphur or film forming substances of various sources has been already used.

Moreover, urea-phosphate based manures, an adduct between urea and phosphoric acid have been also provided with a delayed urea hydrolysis and a low phytotoxicity risk from free ammonia, due to the acid effect induced by the phosphoric acid component.

For preserving natural resources searches have also been promoted to found methods for preparing low nitrogen releasing fertilizing substances, made by a reaction of different nitrogenous manures with wood and paper industry derivatives.

In particular, a method for making N-lignine, with a N contents from 22 to 30%, obtained by an oxidative ammonization and subsequent neutralization by nitric acid, of lignosulphonate waste from the paper industry has been designed.

Microelements are diffused in a variable amount in agricultural soils.

A dynamic control of their absorption is tightly affected by the soil conditions (temperature, pH, organic substance contents, texture, microbic activity, hydric regimen, redox potential) and by the chemical patterns with which they are applied.

In this connection, for cationic microelements, such as iron, manganese, copper and zinc, several preparations have been already proposed, both containing different source organic substances and proper kelates and complex materials, to improve the thus processed microelement absorption by cultivations.

In particular, is already available on the market an organic-mineral manure NPK with mineral nitrogen and amine groups of biologic origin (for example, aminoacids from molassa and proteic hydrolized materials) in which, in addition to a mono and disaccharide component such as: glucose, fructose, galactose, xylose, saccharose and maltose, a series of microelements such as boron, copper, mangagese, zinc, iron, cobalt and molybden can also be present.

However, such a manure compound does not comprise tannin organic extracts or urea.

In this field is also well known a method for producing a "plant growth stimulating material" based on sugar or a sugar mixture (mannose, lactose, dextrose, aritrose, fructose, fucose, galactose, glucose, gulose, maltose, polysaccharides, raffinose, ribose, ribulose, rutinose, saccharose, stachyse, trealose, xylose, xylulose, adenose, amilose, arabinose; phosphorilates; deoxiribose, adonitol, galactitol, glucitol, maltitol, ribitol, sorbitol, xylitol and mixtures thereof), with a macronourishing component, such as, preferably, zinc, iron and manganese.

To achieve the above mentioned objects, it is also known to use molasses, corn syrup, yeast extracts, lignosulphonate materials, humic acids, and synthesis kelates.

In particular, a method for producing a product based on an energetic component of the "carbon/skeleton type" and a macronutrient component with at least a water soluble nitrogen or phosphor source is well known.

In this product, the NP concentrations of N and P are less than 0.625% by weight; the energetic component is present in a rate from about 0.625 to about 8.785% by weight, whereas, with respect to the cationic microelements, useful concentration only for copper (from 0.00025 to 0.0125% by weight of soluble Cu) are indicated.

With respect to the other microelements, concentrations from 0.1 - 3.0% (Fe); 0.08 - 3.0% (Mn); 0.1 - 3.0% (Zn) by weight are used.

However, organic extracts of tannin and non-tannin have never been used as components of the above mentioned mixture, whereas nitrogen concentrations less than 1% are always used.

In this respect a solid form composition based on at least two microelements, selected from the group of Cu, Mn, Zn, Co and Mo, which are added in the form of salts to a water soluble nitrogenous or nitrate material (salified with an element different from the added microelements) is also known.

To the above mentioned basic composition it is possible to add several organic binding materials, either of natural or synthetic origin, such as wheat bran and meal, sawdust, polysaccharides and their derivative materials, such as starch, starch derivatives, cellulose and cellulose derivatives, arginates, lactose, mannitol or sorbitol such as gellies, locust bean rubbers, polyethylene glycols and polyvinyl pirrolidone.

However, the use of organic extracts of tannin and non-tannin, or urea or iron in the above mentioned compositions has not provided.

In a recent time, has been experimentally demostered that tannins, because of their chemical structure, easily form complex with a lot of polivalent ions and in particular with iron.

This feature can assume a non negligible interest in the agronomic field.

In fact, Larix tannin has been already used for preparing soluble kelates such as iron, manganese and zinc.

The above kelates have been already studies as micronutritive fertilizers for appletrees and Ginkgo, and have provided interesting agronomic results.

### SUMMARY OF THE INVENTION

In a prior patent application, in the name of the same Applicant (Patent Application RE2001A 00089 and published as IT 1318355), which is intended as herein included by reference, a method has for concentrating leached materials, including tannin and non tannin aqueous solutions with a ratio from 5 ÷ 0.6):1 and a variable dry contents from 3% to 50% has been disclosed, said aqueous solutions being further concentrated to dryness.

The presence, with tannin, of great amounts of non-tannin substances comprising compounds such as: sugars, organic acids, salts and microelements in a very acid environment (pH 3.0 ÷ 4.0), in addition to providing a low cost nutrient principle direct source, also allows to efficiently convey further fertilizing substances which can be added to the above mentioned organic extracts, said substances essentially comprising nitrogenous compounds and microelements, which will be defined in a more detailed manner hereinafter.

Moreover, the above mentioned organic extracts have a greatly acid pH which, upon repeated applications, modifies the ground or soil reaction, to prevent a progressive alkalinization thereof, susceptible to occur in repeated agricultural operations.

The following diagram illustrates, by way of an example, the response of a firm-sand soil (50 g) to the application of different doses of one of the organic extracts used in the method of the invention.

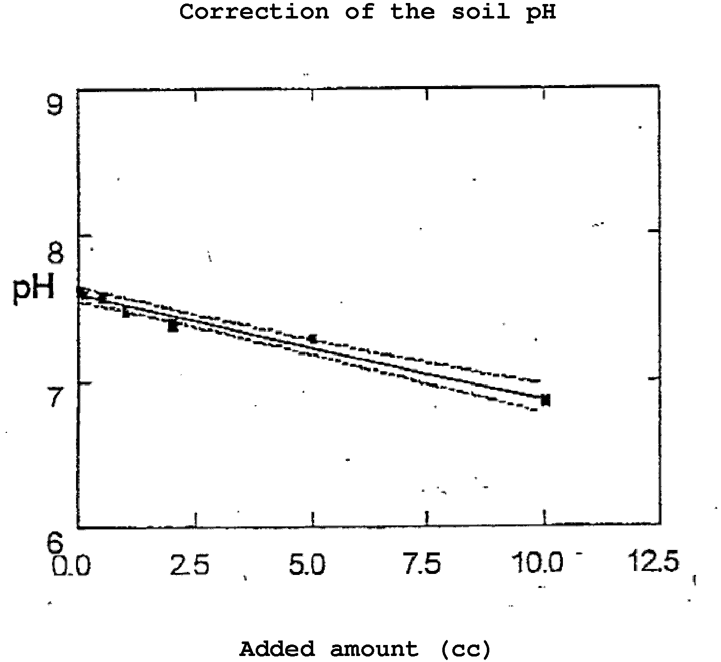

As they are added to water, even at a low concentration, the organic extracts used in the method of the present invention reduce the solution pH toward an interesting acidity condition, as is shown in the test or experimental example shown in the following Table 1, in which, for the acidification, has been used an extract compound including 3% dry substances (s.s.).

**Table 1 - pH values detected or recorded on an organic extract at 3% s.s., used in the method of the invention, and water dilutions thereof.**

| **PRODUCT** | **PH** |
|---|---|
| 3% s.s. organic extract held in a static condition | 3.505 |
| 3% s.s. organic extract held under stirring | 3.469 |
| Dilution water held in a static condition | 7.764 |
| Dilution water held under stirring | 7.776 |
| Extract: water, dilution 1:5 held under stirring | 4.044 |
| Extract: water, dilution 1:10 held under stirring | 4.478 |
| Extract: water, dilution 1:15 held under stirring | 5.010 |
| Extract: water, dilution 1:20 held under stirring | 5.525 |
| Extract: water, dilution 1:25 held under stirring | 5.877 |
| Extract: water, dilution 1:30 held under stirring | 6.095 |

In this connection, it should be apparent that the interest related to soil acidifying solutions and natural origin water is very great, since a broad range of agricultural applications tend, at present, toward biologic production methods, as defined by the CEE 2092/91 rules and subsequent modifications and integrations thereof.

The above mentioned methods prevent, a priori, mineral acids from being used: they tolerate, in some limited cases, an use of synthesis organic acids, such as citric acid, and admit, as a soil acidifying corrective compound only elementar sulphur or, water suspension thereof, provided that this is a product according to the 76/116/CEE rule, or the modified 89/284/CEE rule.

Moreover, the use of organic extracts used in the method of the present invention allows to better control calcareous water (fert-irrigation), even away from a biological agriculture regimen, and of salt containing soils, both in a biologic regimen and in a conventional agriculture regimen, as it will be disclosed in a more detailed manner hereinafter.

In performing searches for providing higly agronomically efficient nitrogenous manure compounds, the Applicant has surprisingly found that the addition to the organic extracts used in the method of the present invention of ammonia nitrogen (ammonium sulphate or nitrate) containing synthesis nitrogenous manure compounds, or an ureic (urea, urea formaldehyde polymers), even in combination manure compounds, and preferably containing solid urea or urea solutions or suspensions, provides the thus obtained manure compositions with a better agronomic performance or properties, i.e. a nitrogen agronomic efficiency better than that of a nitrogenous manure compound per se, and preferably than those of urea or water solutions or suspensions thereof.

An example of an organic extract which can be used for formulating a nitrogenous manure solution or suspension according to the present invention is hereinbelow indicated in Table 2.

**Table 2 - Characteristics of a tannin and non-tannin organic extract to be used according to the present invention for preparing nitrogenous manure solutions or suspensions, starting from urea.**

| **PARAMETER** | **u.m.** | **ANALYTIC DATA** | **Test Method** |
|---|---|---|---|
| **Baumé Density** | °Bè/15°C | 7.4 | NR LAB 006 |
| **Tannins** | % w/w | 5.2 | UNI 4632 NR LAB 001 |
| **Non-tannins** | % w/w | 6.5 | UNI 4632 NR LAB 001 |
| **Water** | % w/w | 88.3 | UNI 4632 NR LAB 001 |
| **Dry Substance** | % w/w | 11.7 | UNI 4632 NR LAB 007 |
| **Tannin/Non-tannin Ratio** | - | 0.8 | **AS CALCULATED** |
| **PH (6.9 Bè solution)** | - | 3.6 | LAB 004 NR |

Advantageously, to the inventive organic extracts a nitrogenous manure compound or solution or suspensions thereof are added, so that the sum of tannin and non-tannin concentrations in the thus obtained manure composition has a maximum value of 90% (w/w), whereas the nitrogen (N) concentration is in the 3 ÷ 45% (w/w) range.

The solid manure compositions used in the method of the present invention are in turn obtained:
(a) by mixing the nitrogenous component, preferably urea, with tannin and non-tannin organic extracts and with a subsequent optional drying in an air stream;
(b) by embedding (coating) the nitrogenous component, preferably grain or prill urea, with dried organic extracts.

In the above cases, the making method can either comprise or not the use of a broad product range or series (such as urea-formaldehyde resins, animal gelly and so on) to favor the disclosed mixing and coating.

Advantageously, the manure compound or composition used in the method of the present invention can comprise, in addition to nitrogen: vegetable nourishing raw elements such as phosphor and potassium; secondary elements such as calcium, magnesium and sulphur; microelements such as boron, cobalt, copper, iron, manganese, molybdenum, selenium and zinc.

All the above mentioned elements can be already present in the organic extracts used in the method of the invention, or they can be added thereto, in several desired or set proportions, during their formulating or preparing operations.

It is also possible to convey the above mentioned microelements, that is boron, cobalt, copper, iron, manganese, molybdenum, selenium and zinc, to the organic extracts used in the method of the invention, thereby providing a further embodiment obtainable by the method of the invention.

To that end, it is possible to add the above mentioned microelements, or as metals per se, or as metal oxides, acids or salts.

Thus, the technical features related and/or part of the present invention will further include:
1. the use of tannin and non-tannin organic extracts, made by water leaching wood materials, and cold concentrating the leached substances thereby obtained, for preparing acidifying solutions for correcting pH and salinity of soil and water;
2. the use of tannin and non-tannin organic extracts for preparing highly efficient and weakly environmentally dangerous manure compositions which, in their different embodiments, can comprise: a) manure compounds containing nitrogen, preferably ureic nitrogen, both in solid and liquid form, even with an addition of other plant nourishing or nutrient elements; b) manure compounds comprising microelements, preferably cationic microelements, such as Cu, Fe, Mn and Zn, both in a solid and in a liquid form.

With respect to the prior art, the present invention provides, in particular, the following advantages.
- The organic extracts used in the method of the invention are natural products, which are separated from wood by an ecological process which, without using solvents or other chemical substances, is contradistinguished by a high yield efficiency, while leaving unaltered the physical-chemical properties of the organic components (i.e. tannin and non-tannin substances).
- The organic extracts used in the method of the present invention can be subjected to regular or normal degradation natural cycles as the lignocellulosic vegetable materials, and they contribute to forming humus.
- The addition to the organic extracts used in the method of the invention, in an "as a prepared form" or in a dried form thereof, of a nitrogenous manure compound, preferably urea, provides a manure which, as brought to solution, has an acid pH (3.5 ÷ 5.5 depending on the embodiments thereof), thereby reducing the ammonia volatilization nitrogen loss, and reducing to a minimum the manure aggressiveness for seeds, young roots and leave apparatus of the processed plants (a phytotoxicity less than that of other nitrogenous manures).
- The inclusion of several derivative materials or gallic and elagic acid residues, which are present in the organic extracts used in the method of the invention, tends to reduce the nitrification process speed in a first application step, after applying the nitrogenous manure to soil, and this contributes to characterizing this manure composition as a slow release nitrogenous manure, with respect to the same nitrogenous components, and, preferably, with respect to urea, and solutions or suspensions thereof, as distributed as such.

- The acidity of tannin and non-tannin organic extracts used in the method of the invention, together with a consistent presence of functional groups (hydroxyl, carboxyl and so on groups), having a complexing action, and derived from simple organic acids and sugar and phenol acids, from free aminoacids and other compounds characteristic of the wood biomass (such as organic phosphates, phytic acid and so on) will contribute to hold in a soluble form, and accordingly easily assimilable by plants, all the main microelements (with the exception of molybden).
- The presence of "non-tannin substances" in the subject organic extracts, will improve the soil microbiologic activity and, more generally, the nourishing of plants and composition of the biomass thereof.

The following Examples will be disclosed only as illustrative of applying the method of the present invention, and they must not be intended as limitative of the scope thereof, which is defined by the accompanying claims.

### EXAMPLE 1

The tannin and non-tannin organic extract used in the method of the present invention has been used for reducing the irrigation water pH (i.e. of the acidifying test water of Table 1) distributed in a microirrigation application to a Virginia Bright cultivar K326 tobacco cultivation or crop.

30 1 of an aqueous 3% s.s. solution have been pnce added to 1m³ water and distributed through three microirrigation operations, in the active tobacco growth period (between 40 and 80 days from transplantation).

Upon processing, the tobacco crop has shown, with respect to a non processed sample, an advanced leaf ripening, thereby providing, at a quantitative-qualitative level, the best productive results.

Of great interest is an observed reduction of the total nitrogen/nicotine ratio of processed tobacco: the excess absorbed N, with respect to the capability of plants of transforming it to nicotine, can, actually, cause an accumulation of inorganic nitrogen which, in turn, would be responsible of the carcinogen nitrosamine and anomalous aroma formations.

**Table 3 - Production results obtained on Virginia Bright tobacco by using acidifying solutions prepared from tannin and non-tannin organic extracts used in the method of the invention.**

| **CHARACTERISTIC** | **CONTROL** | **PROCESSED** |
|---|---|---|
| Days from transplantation to flowering | 92 | 87 |
| Length of the largest leaf at flowering (cm) | 53 | 56 |
| Cured leaf yield (kg/ha) | 2880 | 2960 |
| Quality (classification score 0-10, with 10 being the best) | 6.58 | 7.83 |
| Analytic characteristics of the middle leafs (% s.s.): | | |
| -Total nitrogen (N) | 4.25 | 3.98 |
| -Nicotine | 2.49 | 2.81 |
| -Reducing sugars | 12.15 | 14.77 |
| -Total phosphorus (P) | 0.33 | 0.39 |
| -Total potassium (K) | 2.20 | 2.38 |

### EXAMPLE 2

By mixing in a mixing apparatus, a biammonium phosphate (33% w/w) and powder urea (52% w/w) with 13% (w/w) dried powder organic extracts used in the method of the invention is prepared.

The obtained dry mixture is granulated by compacting it after having added 1.8% (w/w) of a powder urea-formaldehyde resin at 29% (w/w) nitrogen and 0.2% (w/w) water.

The obtained manure composition, having contents of nitrogen (N) of 30% (w/w) and of P₂O₅ of about 15% (w/w) is used for fertilizing cultivations, in soil applications.

### EXAMPLE 3

By mixing in a rotary drum mixing apparatus, a coated manure compound, obtained from granular urea (92% w/w), 5% (w/w) dried powder powder organic extracts according to the invention, 2.8% (w/w) of an urea-formaldehyde resin at 29% (w/w) nitrogen and 0.2% (w/w) water is prepared.

The obtained manure composition, having nitrogen (N) contents of 43% (w/w) is used for fertilizing cultivations, in soil applications.

### EXAMPLE 4

By stirring at a temperature of 40 ÷ 60°C, a liquid solution manure compound having nitrogen (N) contents of 29% (w/w) starting from urea (45% w/w) and from a concentrated material (55% w/w) having dry contents of preferably 5% ÷ 10% is prepared.

This manure composition is used for fertilizing cultivations, as applied both to the soil and to the leafs.

### EXAMPLE 5

The manure composition of Example 4 has been evaluated, with respect to the nitrogen releasing properties thereof, according to a modified Stanford and Smith method.

The test has been performed at the "Dipartimento di Agronomia e Gestione dell'Agroecosistema dell'Università di Pisa (Italy)".

From the results collected in the there in below figure, it should be apparent that after 56 days from the start of the experiment, about 80% nitrogen contained in urea was mineralized, and present in a nitric form in percolating waters, whereas, in the same period, less than 50% of nitrogen of the manure compound of the Example 4 was mineralized.

Accordingly, it should be apparent that the manure composition of Example 4 provides a nitrogen release slower than that of urea.

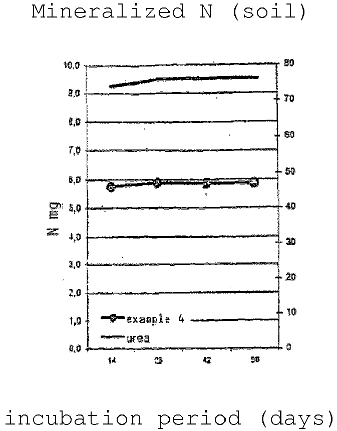

### EXAMPLE 6

The manure compositions of Examples 4 and 9 have been compared with urea and a non processed sample in an evaluating test for evaluating the protective action on the soil pH and the fertilizing effect on a vat lettuce cultivation, at the "Dipartimento di Agronomia e Gestione dell'Agroecosistema".

The manure compositions have been used at N doses corresponding to 100, 200 and 300 kg/Ha, and the administering effect of two different irrigation water types (i.e. an artificially salted water and a non-salted water) has been also evaluated.

The results are to be further evaluated; however, with respect to the evolvement of soil pH, under salinity conditions, it is possible to state that the manure compositions obtainable by the method of the invention provide, in the time, an increase of the soil pH, than that of urea.

The productive results recorded during the cultivation biologic cycle are being evaluated.

Anyhow, during a commercial collection, the productions, as expressed as fresh weight, have been found to be analogous, with the exception of the product of Example 9, which provided a small yield increase as it was applied at the highest doses (in + 5% average).

This effect, however, is less evident in tests performed with salt water irrigations (only + 2%).

In each case, the product of Example 9 provided the plants with a more luxurious aspect and an intenser green color, in addition to a greater preservability.

### EXAMPLE 7

Under stirring and at a temperature of 40 ÷ 60°C, a liquid suspension manure containing 20.5% (w/w) nitrogen (N) is prepared, starting from the organic extract used in the method of the invention (48% w/w), preferably with a dry residue from 5 ÷ 10%, and from: urea (30% w/w), ammonium nitrate (20% w/w) and attapulgite 2% w/w).

This manure composition can be used for fertilizing cultivations, as applied to the soil.

### EXAMPLE 8

The manure composition of Example 4 has been evaluated on hard wheat, with respect to the ammonium nitrate calcium at 26% N (CAN) with the same nitrogen doses (100 kg/ha) and applying period (at the start of bunching).

The test has been performed at Grosseto (Middle Italy), and has been performed by the "Dipartimento di Agronomia e Gestione dell'Agroecosistema dell'Università di Pisa".

The full production results are yet to be determined and processed.

However, the dry weight of culms (entire part of the plant above ground) was 4.49 t/ha for the inventive manure compound, with respect to a value of 4.26 t/ha for CAN.

The weight of 1000 carioxides was 42.58 and 40,42 g, respectively.

### EXAMPLE 9

A liquid manure composition based on an organic extract of tannin and non-tannin substances used in the method of the invention, with s.s. contents of 5% (63% w/w), urea (22% w/w) and heptahydrate ferrous sulphate (15% w/w) with end nitrogen contents of 10% and end iron contents (Fe) of about 3% has been prepared.

This product can be used for fertilizing cultivations having high demands of nitrogen and iron, such as grass surfaces, in a pre and post implantation, and even in fert-irrigation too.

### EXAMPLE 10

A magnesium and microelement (B, Cu, Fe, Mn, Mo and Zn) based manure composition is prepared by mixing, with a tannin and non-tannin dried organic extract used in the method of the present invention (32% w/w) the following materials: heptahydrate magnesium sulphate (18.9 w/w), heptahydrate ferrous sulphate (20% w/w), sodium octoborate (6% w/w), pentahydrate copper sulphate (2% w/w), monohydrate manganese sulphate (9% w/w), monohydrate zinc sulphate (3% w/w), and sodium molybdate (0.1% w/w).

The product, dissolved in water in a ratio of 50 ÷ 100g/100 1 is used for correcting yellowing and multiple deficient status.

### EXAMPLE 11

A liquid manure composition based on a tannin and non-tannin organic extract used in the method of the present invention, with s.s. contents of 3% (70% w/w) and heptahydrate ferrous sulphate (30% w/w) with a Fe contents of about 6% is prepared.

The product is used for correcting an iron lacking or deficient status of cultivations as applied to the soil, in fert-irrigation too.

### EXAMPLE 12

The product of Example 11 has been used for correcting an iron deficient status recorded on cultivar Abate pear on BA29, grown on a lime-calcareous soil.

The product has been distributed in fert-irrigation in an amount of 1000 l/ha split into three application operations, each combined to the application of 15 m³ irrigation water, in a period from half June 2002 each 15 days.

The comparing has been performed with a sample processed by a Fe (EDDHA) chelate with a dosis of 12 kg/ha, which has been subjected to the same operations (three times fractioned distributions, at the same period, with the same application procedure).

A like leaf reviving effect has been obtained.

Moreover, the fruits of the plants processed by the product of Example 11 have provided a greater flavor and aroma of the pulp at panel test, longer shelf-life (+ 18 days, compared with sample, at room temperature), better refrigerator preservability (incidence of softening at 60 days from harvest: -16% compared with sample).

## Claims

1. A method for preparing a highly efficient and weakly polluting manure composition for biologic agriculture, **characterised in that** said method comprises the steps of providing an organic extract, in a liquid or in a solid form obtainable by drying the organic extract, said organic extract being a natural product obtainable by water leaching wood without using solvents or other chemical substances and by subsequently cold concentrating the leached substances, said organic extract comprising tannin and non-tannin substances, said non-tannin substances comprising sugars, organic acids, salts and microelements with a weight ratio of (5-0.6):1 between the amount of said tannin and the amount of said non-tannin substances and a dry contents from 3 to 50%, said organic extracts having a pH value from 3 to 4 to prevent a progressive alkalinisation of a ground said manure composition is repeatedly applied to, mixing with said organic extract a manure compound, wherein said manure compound is an ammonia or ureic nitrogen containing synthesis nitrogenous manure compound or solutions or suspensions thereof, a sum of the concentrations of said tannin and non-tannin substances in said weakly polluting nitrogenous manure composition having a maximum value of 90% w/w, and the nitrogen concentration in said manure composition being from 3 to 45%.

2. A method according to claim 1, **characterized in that** said nitrogenous manure composition is prepared by mixing 33% w/w biammonium phosphate and 52% w/w urea powder with 13% w/w of a powder of said organic extract, adding to the mixture 1.8% w/w of an urea-formaldehyde powder at 29% w/w nitrogen and 0.2% w/w water and compacting and granulating the thus obtained mixture to provide a granulated highly efficient weakly polluting solid manure composition having a nitrogen contents of 30% w/w and a P₂0₅ contents of 15% w/w.

3. A method according to claim 1, **characterized in that** said nitrogenous manure composition is a solid coated manure composition prepared by mixing, in a rotary drum mixing apparatus, 92% w/w granular urea, 5% w/w dried powder organic extracts, 2.8% w/w of an urea-formaldehyde resin, 29% w/w nitrogen and 0.2% w/w water, said solid coated manure composition having a nitrogen contents of 43% w/w.

4. A method according to claim 1, **characterized in that** said composition is prepared by stirring, at a temperature of 40-60°C, 45% w/w urea and 55% w/w of a said organic extract having a dry contents from 5% to 10%, to provide a liquid highly efficient weakly polluting manure composition having a nitrogen contents of 29% w/w and a nitrogen release slower than that of urea.

5. A method according to claim 1, **characterized in that** said nitrogenous manure composition is prepared by stirring, at a temperature from 40 to 60°C, 48% w/w of a said organic extract having a dry contents from 5 to 10%, 30% w/w urea, 20% w/w ammonium nitrate and 2% w/w attapulgite, to provide a liquid suspension manure composition having a nitrogen contents of 20.5% w/w.

6. A method according to claim 1, **characterized in that** said manure composition is prepared by mixing 32% w/w of a said organic extract, 18.9% w/w heptahydrate magnesium sulphate, 29% w/w heptahydrate ferrous sulphate, 6% w/w sodium octoborate, 2% w/w pentahydrate copper sulphate, 9% w/w monohydrate manganese sulphate, 3% w/w monohydrate zinc sulphate and 0.1% w/w sodium molybdate, dissolving in water in a ratio from 50 to 100g/100l the thus obtained mixture to provide a Mg, B, Cu, Fe, Mn, Mo and Zn microelement containing liquid manure composition.

7. A method according to claim 1, **characterized in that** said method comprises the further step of adding to said highly efficient weakly polluting manure composition additional plant nourishing elements, including urea, ammonium sulphate and nitrate and urea-formaldehyde polymers.

8. A method according to claim 1, **characterized in that** said method further comprises the step of adding to said highly efficient weakly polluting nitrogenous manure additional phosphorus, potassium, sulphur, magnesium, calcium, boron, cobalt, copper, iron, manganese, molybdenum, selenium and zinc either individually or in any mixtures thereof.

9. A method according to claim 1, **characterized in that** said organic extract contains amounts variable from 1 to 20% w/w of said non tannin substances.

10. A method according to claim 1, **characterized in that** the concentration of said tannin substances varies from 1 to 75%.

## Patentansprüche

1. Verfahren zum Herstellen einer hochwirksamen und gering belastenden Dungzusammensetzung für die biologische Landwirtschaft, **dadurch gekennzeichnet, dass** das Verfahren die Schritte des Bereitstellens eines organischen Extrakts in flüssiger oder fester Form, erhältlich durch Trocknen des organischen Extrakts umfasst, wobei der organische Extrakt ein natürliches Produkt ist, erhältlich durch Wasserauslaugung von Holz ohne Verwendung von Lösungsmitteln oder anderen chemischen Stoffen und anschließende Kaltkonzentrierung der ausgelaugten Stoffe, wobei der organische Extrakt tanninhaltige und tanninfreie Stoffe umfasst, wobei die tanninfreien Stoffe Zucker, organische Säuren, Salze und Spurenelemente in einem Gewichtsverhältinis von (5-0,6):1 zwischen der Menge an tanninhaltigen und der Menge an tanninfreien Stoffen und einen Trockengehalt von 3 bis 50 % umfasst, wobei die organischen Extrakte einen pH-Wert von 3 bis 4 aufweisen, um eine fortschreitende Alkalisierung eines Bodens zu vermeiden, wobei die Dungzusammensetzung wiederholt aufgebracht wird, wobei eine Dungverbindung mit dem organischen Extrakt gemischt wird, wobei die Dungverbindung eine Ammoniak oder Stickstoffharnstoff enthaltende, synthetische, stickstoffhaltige Dungverbindung oder Lösungen oder Suspensionen hiervon ist, wobei eine Summe der Konzentrationen der tanninhaltigen und tanninfreien Stoffe in der gering belastenden, stickstoffhaltigen Dungzusammensetzung einen Höchstwert von 90 % w/w aufweist und die Stickstoffkonzentration in der Dungzusammensetzung zwischen 3 bis 45 % liegt.

2. Verfahren nach Anspruch 1, **dadurch gekennzeichnet, dass** die stickstoffhaltige Dungzusammensetzung hergestellt wird durch Mischen von 33 % w/w Diammoniumphosphat und 52 % w/w Harnstoffpulver mit 13 % w/w eines Pulvers des organischen Extrakts, Zugeben zu dem Gemisch 1,8 % w/w eines Harnstoff-Formaldehydpulvers mit 29 % w/w Stickstoff und 0,2 % w/w Wasser und Verdichten und Granulieren des so erhaltenen Gemisches, um eine hochwirksame, gering belastende, feste, granulierte Dungzusammensetzung mit einem Stickstoffgehalt von 30 % w/w und einem P₂0₅-Gehalt von 15 % w/w bereitzustellen.

3. Verfahren nach Anspruch 1, **dadurch gekennzeichnet, dass** die stickstoffhaltige Dungzusammensetzung eine fest beschichtete Dungzusammensetzung ist, die durch Mischen von 92 % w/w Harnstoff in Granulatform, 5 % w/w getrocknetes Pulver organischer Auszüge, 2,8 % w/w eines Harnstoff-Formaldehydharzes, 29 % w/w Stickstoff und 0,2 % w/w Wasser in einem Drehtrommelmischer hergestellt wird, wobei die fest beschichtete Dungzusammensetzung einen Stickstoffgehalt von 43 % w/w aufweist.

4. Verfahren nach Anspruch 1, **dadurch gekennzeichnet, dass** die Zusammensetzung durch Rühren von 45 % w/w Harnstoff und 55 % w/w des organischen Extrakts mit einem Trockengehalt von 5 % bis 10 % bei einer Temperatur von 40 - 60 °C hergestellt wird, um eine hochwirksame, gering belastende flüssige Dungzusammensetzung mit einem Stickstoffgehalt von 29 % w/w und einer Stickstofffreisetzung bereitzustellen, die geringer als die des Harnstoffs ist.

5. Verfahren nach Anspruch 1, **dadurch gekennzeichnet, dass** die stickstoffhaltige Dungzusammensetzung durch Rühren von 48 % w/w des organischen Extrakts mit einem Trockengehalt von 5 bis 10 %, 30 % w/w Harnstoff, 20 % w/w Ammoniumnitrat und 2 % w/w Attapulgit bei einer Temperatur von 40 bis 60 °C hergestellt wird, um eine flüssige Suspension der Dungzusammensetzung mit einem Stickstoffgehalt von 20,5 % w/w bereitzustellen.

6. Verfahren nach Anspruch 1, **dadurch gekennzeichnet, dass** die Dungzusammensetzung durch Mischen von 32 % w/w des organischen Extrakts, 18,9 % w/w Magnesiumsulfat-Heptahydrat, 29 % w/w Eisen(II)-sulfat-Heptahydrat, 6 % w/w Natriumoctoborat, 2 % w/w Kupfersulfat-Pentahydrat, 9 % w/w Mangansulfat-Monohydrat, 3 % w/w Zinksulfat-Monohydrat und 0,1 % w/w Natriummolybdat hergestellt wird, wobei das so erhaltene Gemisch in Wasser in einem Verhältnis von 50 bis 100 g/100 l aufgelöst wird, um eine die Spurenelemente Mg, B, Cu, Fe, Mn, Mo und Zn enthaltende, flüssige Dungzusammensetzung bereitzustellen.

7. Verfahren nach Anspruch 1, **dadurch gekennzeichnet, dass** das Verfahren den weiteren Schritt des Zugebens von zusätzlichen Pflanzennährstoffen, enthaltend Harnstoff, Ammoniumsulfat und -nitrat und Harnstoffformaldehyd-Polymere zu der hochwirksamen, gering belastenden Dungzusammensetzung umfasst.

8. Verfahren nach Anspruch 1, **dadurch gekennzeichnet, dass** das Verfahren ferner den Schritt des Zugebens von zusätzlichem Phosphor, Kalium, Schwefel, Magnesium, Calcium, Bor, Kobalt, Kupfer, Eisen, Mangan, Molybdän, Selen und Zink, entweder einzeln oder in beliebigen Gemischen davon zu der hochwirksamen, gering belastenden, stickstoffhaltigen Dungzusammensetzung umfasst.

9. Verfahren nach Anspruch 1, **dadurch gekennzeichnet, dass** der organische Extrakt von 1 bis 20 % w/w variierende Mengen der tanninfreien Stoffe enthält.

10. Verfahren nach Anspruch 1, **dadurch gekennzeichnet, dass** die Konzentration der tanninhaltigen Stoffe von 1 bis 75 % variiert.

## Revendications

1. Procédé pour préparer une composition d'engrais hautement efficace et faiblement polluante pour l'agriculture biologique, **caractérisé en ce que** ledit procédé comprend les étapes de fourniture d'un extrait organique, dans un liquide ou sous une forme solide pouvant être obtenue séchant l'extrait organique, ledit extrait organique étant un produit naturel pouvant être obtenu par lessivage du bois à l'eau sans utilisation de solvants ou d'autres substances chimiques et par concentration à froid successive des substances lessivées, ledit extrait organique comprenant du tannin et des substances non tanniques, lesdites substances non tanniques comprenant des sucres, acides organiques, sels et microéléments avec un rapport en poids de (5-0,6):1 entre la quantité dudit tannin et la quantité desdites substances non tanniques et une teneur en matière sèche de 3 à 50%, ledit extraits organiques ayant une valeur de pH de 3 à 4 pour empêcher une alcalinisation progressive d'un terrain auquel ladite composition d'engrais est appliquée de manière répétée, en mélangeant un composé d'engrais avec ledit extrait organique, dans lequel ledit composé d'engrais est un composé d'engrais azoté de synthèse contenant de l'azote ammoniacal ou uréique ou des solutions ou des suspensions de celui-ci, une somme des concentrations dudit tannin et desdites substances non tanniques dans ladite composition d'engrais azoté faiblement polluante ayant une valeur maximale de 90% p/p, et la concentration en azote dans ladite composition d'engrais de 3 à 45%.

2. Procédé selon la revendication 1, **caractérisé en ce que** ladite composition d'engrais azoté est préparée en mélangeant 33% p/p de phosphate de diammonium et 52% p/p de poudre d'urée avec 13% p/p d'une poudre dudit extrait organique, en ajoutant au mélange 1,8% p/p d'une poudre d'urée-formaldéhyde à 29% p/p d'azote et 0,2% p/p d'eau et en compactant et en granulant le mélange ainsi obtenu pour fournir une composition d'engrais solide hautement efficace et faiblement polluante granulée ayant une teneur en azote de 30% p/p et une teneur en P₂0₅ de 15% p/p.

3. Procédé selon la revendication 1, **caractérisé en ce que** ladite composition d'engrais azoté est une composition d'engrais enrobée solide préparée en mélangeant, dans un appareil de mélange à tambour rotatif, 92% p/p d'urée granulaire, 5% p/p d'extraits organiques secs en poudre, 2,8% p/p d'une résine d'urée-formaldéhyde, 29% p/p d'azote et 0,2% p/p d'eau, ladite composition d'engrais enrobée solide ayant une teneur en azote de 43% p/p.

4. Procédé selon la revendication 1, **caractérisé en ce que** ladite composition est préparée par agitation, à une température de 40-60°C, de 45% p/p d'urée et 55% p/p d'un dit extrait organique ayant une teneur en matière sèche de 5% à 10%, pour fournir une composition d'engrais hautement efficace et faiblement polluante liquide ayant une teneur en azote de 29% p/p et une libération d'azote plus lente que celle d'urée.

5. Procédé selon la revendication 1, **caractérisé en ce que** ladite composition d'engrais azoté est préparée par agitation, à une température de 40 à 60°C, de 48% p/p d'un dit extrait organique ayant une teneur en matière sèche de 5 à 10%, 30% p/p d'urée, 20% p/p de nitrate d'ammonium et 2% p/p d'attapulgite, pour fournir une composition d'engrais en suspension liquide ayant une teneur en azote de 20,5% p/p.

6. Procédé selon la revendication 1, **caractérisé en ce que** ladite composition d'engrais est préparée en mélangeant 32% p/p d'un dit extrait organique, 18,9% p/p de sulfate de magnésium heptahydraté, 29% p/p de sulfate de fer heptahydraté, 6% p/p d'octoborate de sodium, 2% p/p de sulfate de cuivre pentahydraté, 9% p/p de sulfate de manganèse monohydraté, 3% p/p de sulfate de zinc monohydraté et 0,1% p/p de molybdate de sodium, en dissolvant dans l'eau dans un rapport de 50 à 100g/100l le mélange ainsi obtenu pour fournir une composition d'engrais liquide contenant des microéléments de Mg, B, Cu, Fe, Mn, Mo et Zn.

7. Procédé selon la revendication 1, **caractérisé en ce que** ledit procédé comprend en outre l'étape d'addition à ladite composition d'engrais hautement efficace et faiblement polluante d'autres éléments nutritifs pour les plantes, comprenant l'urée, le sulfate d'ammonium et le nitrate et des polymères d'urée-formaldéhyde.

8. Procédé selon la revendication 1, **caractérisé en ce que** ledit procédé comprend en outre l'étape d'addition audit engrais azoté hautement efficace et faiblement polluante d'autre phosphore, potassium, soufre, magnésium, calcium, bore, cobalt, cuivre, fer, manganèse, molybdène, sélénium et zinc, soit individuellement soit dans n'importe lequel de leurs mélanges.

9. Procédé selon la revendication 1, **caractérisé en ce que** ledit extrait organique contient des quantités variables de 1 à 20% p/p desdites substances non tanniques.

10. Procédé selon la revendication 1, **caractérisé en ce que** la concentration desdites substances tanniques varie de 1 à 75%.
